# EUROPÄISCHE PATENTSCHRIFT

(11) **EP 0 810 019 B1**
(45) Veröffentlichungstag und Bekanntmachung des Hinweises auf die Patenterteilung: **30.06.2004**
(21) Anmeldenummer: 97810302.6
(22) Anmeldetag: 15.05.1997
(51) Int. Cl.: B01D 29/15, B01D 29/48

(54) **Spaltfilterkerze für die Anschwemmfiltration, Verfahren zu deren Herstellung und Endstück für eine Spaltfilterkerze für die Anschwemmfiltration**
Edge filter candle for precoating filtration, its method of manufacturing and end part for the edge filter candle for precoating filtration
Bougie filtrante à arêtes pour la filtration à précouche, son procédé de fabrication et pièce d'extrémité pour la bougie filtrante à arêtes pour la filtration à précouche

(30) Priorität: 31.05.1996 CH 137996
(43) Veröffentlichungstag der Anmeldung: 03.12.1997
(73) Patentinhaber: Filtrox-Werk AG, CH-9001 St. Gallen (CH)
(72) Erfinder: Jungi, Niklaus, 9032 Engelburg (CH); Schrader, Ulrich Dr., 9304 Bernhardzell (CH)
(74) Vertreter: Hepp, Dieter

(56) Entgegenhaltungen:
- EP-A- 0 548 910
- DE-A- 2 628 237
- DE-U- 9 103 090
- NL-C- 80 010
- US-A- 4 088 580
- US-A- 5 273 652

## Beschreibung

Die Erfindung betrifft eine Spaltfilterkerze für die Anschwemmfiltration sowie ein Verfahren zu deren Herstellung.

Zur Filtration von Flüssigkeiten, insbesondere Getränken wie beispielsweise Bier, werden häufig rückspülbare Filteranordnungen mit Anschwemmkerzenfiltern verwendet. Solche Filteranordnungen sind durch eine Öffnungen aufweisende Lochplatte in einen Filtratraum und in einen Unfiltratraum aufgeteilt. In die Öffnungen werden Filterkerzen, insbesondere Anschwemmkerzen befestigt. Damit die zu reinigende Flüssigkeit vom Unfiltratraum in den Filtratraum gelangen kann, muss sie die Oberfläche der Filterkerzen durchströmen, wobei Verunreinigungen der Flüssigkeit zurückgehalten werden. Häufig verwendet werden Spaltfilterkerzen, bei welchen ein Draht spiralförmig derart um Haltestäbe aufgewikelt wird, dass zwischen den einzelnen Wicklungen ein Spalt von genau definierter Grösse (typischerweise 40 - 100 µm) gebildet wird.

Aus der EP-B-203 206 ist beispielsweise eine solche Filteranordnung bekannt. Eine Halteeinrichtung wird in die Öffnungen der Lochplatte eingesetzt und die Filterkerze wird auf diese Halteeinrichtung aufgeschraubt. Die Filterkerze weist in ihrem Inneren ein Steigrohr auf, durch welches die filtrierte Flüssigkeit vom Innern der Filterkerze in den Filtratraum steigen kann.

Es hat sich nun gezeigt, dass insbesondere im Endbereich der Filterkerze aufgrund der den Endbereich umhüllenden Hülse tote Räume gebildet werden, in denen sich Verunreinigungen ablagern können, was zu entsprechendem Bakterien- oder Pilzwachstum führen kann.

Besonders bei der heute immer häufigeren kalten Filtration von Bier ergeben sich dadurch Probleme. Ein weiteres Problem besteht darin, dass diese toten Räume beim Reinigen der Filterkerze durch Rückspülen schwer erreicht werden.

Bei der Anschwemmfiltration wird ein Filterhilfsmittel auf die Aussenfläche der Filterkerzen aufgetragen. Von Zeit zu Zeit müssen die aus der gereinigten Flüssigkeit entfernten Verunreinigungen wieder von der Oberfläche der Filterkerze entfernt werden. Dazu wird die Flussrichtung der Filteranordnung umgekehrt und die Filterkerzen werden mit einem Reinigungsmedium in umgekehrter Richtung durchgespült. Durch diese Rückspülung wird der auf der Oberfläche der Filterkerze aufgetragene Filterkuchen abgelöst.

Beim Stand der Technik werden aber bei dieser Rückspülung die toten Räume im Bereich des Endes der Filterkerze meist schlecht oder nicht durchspült.

Die Aufgabe der vorliegenden Erfindung besteht darin, die Nachteile des Bekannten zu vermeiden, insbesondere eine einfach herstellbare und mechanisch stabile Filterkerze zu schaffen, welche in ihrem Endbereich keine Räume aufweist, in denen sich Verunreinigungen absetzen können und die nicht oder schlecht rückspülbar sind. Die Filterkerze soll auf wirtschaftliche Weise rationell herstellbar sein. Eine weitere Aufgabe der vorliegenden Erfindung besteht darin, ein Verfahren zur Herstellung einer solchen Filterkerze zu schaffen. Noch eine weitere Aufgabe der Erfindung besteht darin, ein Endteil für eine Filterkerze zu schaffen, das die oben genannten Nachteile des Bekannten, insbesondere die schwer rückspülbaren Räume am Ende der Filterkerze vermeidet.

Erfindungsgemäss werden diese Aufgaben mit einer Filterkerze sowie einem Verfahren zu deren Herstellung mit den Merkmalen der unabhängigen Patentansprüche gelöst.

Eine Spaltfilterkerze für die Anschwemmfiltration weist ein Traggerüst aus Tragstäben auf, um welche in Windungen schraubenlinienförmig ein Draht gewickelt ist. Zwischen den Windungen des Drahtes wird ein Spalt belassen. Der Spalt ist so dimensioniert, dass die Verunreinigungen der zu filtrierenden Flüssigkeit nicht zwischen den einzelnen Windungen vom Unfiltratraum einer Filteranordnung in das durch die Windungen des Drahts eingeschlossene Innere der Spaltfilterkerze gelangen können. Wesentlich ist dabei, dass die Spaltbreite über die gesamte Länge der Spaltfilterkerze im Rahmen vorgegebener Toleranzen gleich ist, damit Filterhilfsmittel und Verunreinigungen in gleicher Weise zurückgehalten werden und auch nicht die Spalten verstopfen.

Das Drahtgerüst ist auf wenigstens einer Seite mit einem Anschlussstück verschweisst. Das Anschlussstück dient auf der einen Seite zum Abschliessen des Innenraums der Filterkerze vom Unfiltratraum einer Filteranordnung und auf der anderen Seite zur Halterung der Filterkerze in der Halteanordnung einer Filteranlage.

Die Tragstäbe sind in einem benachbart zum Anschlussstück liegenden Randbereich gestaucht, wobei die Windungen mit den Tragstäben im Randbereich derart verbunden sind, dass sich durch die Stauchung ein Spalt ergibt, der über die ganze Filterkerze eine gleichbleibende Spaltbreite (im Rahmen der Toleranzen) aufweist.

Mit dieser spezifischen Konstruktion erübrigt sich das Vorsehen einer Hülse im End- und/oder Anfangsbereich der Filterkerze. Dadurch wird die Bildung von Toträumen im Endbereich und/oder Anfangsbereich der Filterkerze vermieden.

In einem anderen, besonders vorteilhaften Ausführungsbeispiel ist das Traggerüst auf der einen Seite mit einem Endteil versehen, welches das Innere der Filterkerze vom Unfiltratraum einer Filteranordnung abtrennt. Der um das Drahtgerüst gewundene Draht an seinem dem Endteil zugewandten Ende und/oder die dem Kopfteil zugewandte Oberfläche des Endteils sind derart bearbeitet, dass zwischen der letzten Windung des Drahtes und der Oberfläche des Endteils ein Spalt gebildet wird, der im wesentlichen dieselbe Breite aufweist, wie der zwischen den Windungen des Drahtes definierte Spalt.

In einem ersten Ausführungsbeispiel ist der Draht im Bereich seiner letzten Windung derart plan geschliffen, dass er in einer Ebene liegt, die normal zur Achse der Filterkerze verläuft. Dadurch wird zwischen der Oberfläche des Endteils und der letzten Windung des Drahts ein Spalt konstanter Breite gebildet. Durch die Dimensionierung der Tragstäbe, resp. durch die Definition des Anfangspunkt der ersten Windung des Drahtes auf den Tragstäben kann die Breite dieses Spaltes genau bestimmt werden. Der Spalt kann auch auf Null reduziert werden, wenn die letzte Windung am Endteil anliegen darf.

In einem anderen Ausführungsbeispiel weist das Endteil einen gegen den Innenraum der Filterkerze weisenden, unter einer Steigung verlaufenden, umlaufenden Rand auf. Die Steigung des Rands entspricht der Steigung des schraubenlinienförmig aufgebrachten Drahtes. Auch mit dieser Konstruktion wird erreicht, dass der Spalt zwischen dem Endteil und der letzten Windung des Drahtes über den ganzen Umfang eine konstante Spaltbreite aufweist.

Die aus dem Stand der Technik bekannten Nachteile können auch dadurch verringert werden, wenn das die Filterkerzen verschliessende Endteil mit Durchlässen versehen wird, deren mittlerer Durchmesser etwa der Spaltbreite des Spaltes einer Anschwemmfilterkerze entspricht. Dadurch kann bei der Rückspülung der Filterkerze das Spülmedium durch das Endteil austreten. Im Endbereich der Filterkerze gelegene potentielle Toträume werden bei dieser Rückspülung ebenfalls erfasst.

Eine besonders vorteilhafte Spaltfilterkerze weist ein Endteil mit einem mittigen Bereich und einem Randbereich auf. Der mittige Bereich weist dabei einen geringeren Abstand zum Kopfteil der Filterkerze auf als der Randbereich. Mit dieser Dimensionierung wird ein besonders günstiges Strömungsverhalten beim Rückspülen der Filterkerze mit einem Reinigungsmedium erreicht.

Das Endteil weist ausserdem vorteilhaft einen umlaufenden, im Querschnitt etwa keilförmigen Wulst auf, auf welchem die Tragstäbe des Traggerüstes einer Filterkerze abgestützt und positioniert werden können.

Beim Verfahren zum Herstellen einer erfindungsgemässen Spaltfilterkerze wird in einem ersten Schritt der Draht in einer schraubenförmigen Linie auf ein Drahtgerüst aus Tragstäben aufgebracht. Die Verbindung zwischen dem Draht und dem Traggerüst wird im allgemeinen durch Punktschweissen erzeugt. Zwischen den Windungen des Drahtes wird in einem mittigen Bereich des Traggerüstes ein Spalt, dessen Spaltbreite im Bereich von 10 - 250 µ, vorzugsweise 40 - 110 µ liegt, belassen. Bei wenigstens je drei im Randbereich des Traggerüstes angeordneten Windungen wird ein Spalt belassen, der eine grössere Spaltbreite als der Spalt im mittigen Bereich des Traggerüstes aufweist. Diese grössere Spaltbreite hängt von der Dimensionierung der Tragstäbe ab. Sie kann bis etwa 500 µ betragen.

In einem zweiten Schritt wird ein Kopf- und/oder ein Endteil an dem oder den Randbereichen des Traggerüstes angeschweisst. Durch die bei einer Elektroschweissung entstehende Kraft- und Wärmeeinwirkung werden die Tragstäbe in ihrem Randbereich gestaucht. Erfindungswesentlich ist, dass die Tragstäbe derart gestaucht werden, dass der Spalt zwischen den Windungen des Drahtes nach dem Stauchen in den Randbereichen im wesentlichen eine Spaltbreite aufweist, die in den vorangehend genannten Toleranzwerten von 10 - 250 µ, vorzugsweise 40 - 110 µ liegt.

Besonders günstig ist es, wenn die letzte Windung des Drahts im Randbereich des Traggerüstes vor dem Anschweissen des Kopf- und/oder des Endteils plan abgeschliffen wird, so dass die letzte Windung in einer Ebene liegt, die normal zur Achse der Spaltfilterkerze, d.h. im wesentlichen normal zur Längsrichtung der Tragstäbe liegt.

Die Erfindung wird im folgenden in Ausführungsbeispielen und anhand der Zeichnungen näher erläutert. Es zeigen:
- Figur 1: eine Filteranordnung mit anschwemmbaren Spaltfilterkerzen,
- Figur 2: eine Seitenansicht/einen Querschnitt einer erfindungsgemässen Filterkerze,
- Figur 3: eine Draufsicht auf die Filterkerze entlang der Linie A-A in Figur 2,
- Figur 4a: einen Querschnitt durch den unteren Teil der Filterkerze von 2a,
- Figur 4b: eine Seitenansicht des Endteils der Filterkerze von Figur 2,
- Figur 5: ein vergrösserter Ausschnitt der zwei letzten Windungen einer erfindungsgemässen Filterkerze,
- Figuren 6a und 6b: Verfahrensschritte, die das erfindungsgemässe Herstellungsverfahren zeigen,
- Figur 7: einen Querschnitt durch ein Endteil mit einer Filterkerze mit den Merkmalen der Erfindung,
- Figur 8: einen Querschnitt durch ein weiteres Ausführungsbeispiel eines Endteils, und
- Figuren 9a bis 10: weitere Ausführungsbeispiele von Endteilen mit den Merkmalen der Erfindung.

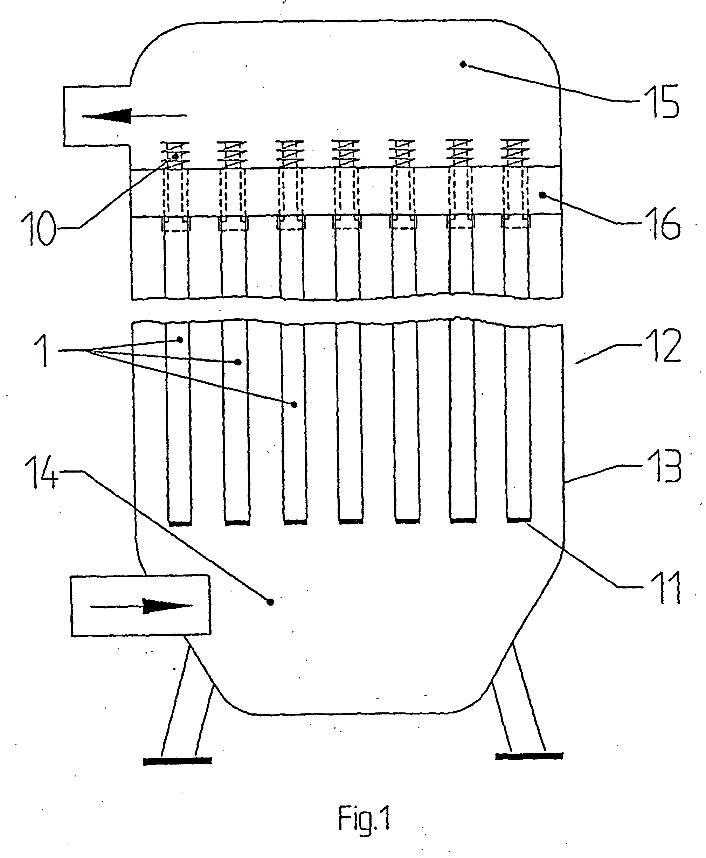

Figur 1 zeigt eine Filteranordnung 12 mit erfindungsgemässen Spaltfilterkerzen 1. Die Filteranordnung 12 weist ein Gehäuse 13 auf, welches durch eine Lochplatte 16 in einen Filtratraum 15 und in einen Unfiltratraum 14 aufgeteilt ist. Die Spaltfilterkerzen 1 sind mittels eines Kopfteils 10 an der Lochplatte 16 befestigt und hängen frei im Unfiltratraum 14. Das Innere der Spaltfilterkerzen 1 ist am unteren Ende der Spaltfilterkerzen 1 durch ein Endteil 11 vom Unfiltratraum 14 abgetrennt.

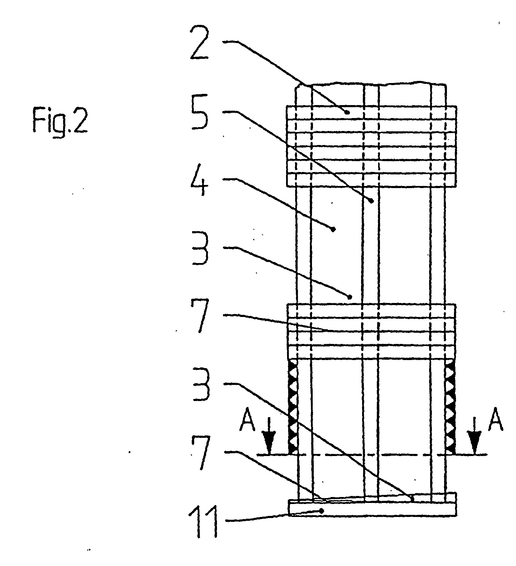

Figur 2 zeigt den unteren Teil einer Spaltfilterkerze in der Seitenansicht bzw. im Querschnitt. Die Spaltfilterkerze 1 besteht im wesentlichen aus einem Traggerüst 4 aus etwa zylindrisch angeordneten Tragstäben 5, über welche schraubenlinienförmig in Windungen 3 ein Draht 2 gewickelt ist. Die Windungen 3 sind derart im Abstand um die Tragstäbe 5 herum gelegt, dass zwischen je zwei benachbarten Windungen 3 ein Spalt 7 belassen wird. Der Draht 2 weist vorzugsweise ein dreieckförmiges Profil auf, so dass auf der Oberfläche der Filterkerze ein schmaler Spalt 7 gebildet wird, der sich gegen das Innere der Filterkerze hin aufweitet. Die letzte Windung 3 des Drahtes 2 ist derart geschliffen, dass das untere Ende der Windung in einer Ebene liegt, die normal zur Achse der Spaltfilterkerze 1, d.h. normal zu den Tragstäben 5 liegt.

Das untere Ende der Spaltfilterkerze ist mit einem Endteil 11 abgeschlossen, das an die Tragstäbe 5 angeschweisst ist. Dadurch, dass die letzte der Windungen 3 des Drahts 2 plan abgeschliffen ist, entsteht zwischen dem Draht 2 und dem Endteil 11 ein Spalt 7, der eine gleichmässige Breite aufweist. Dieser Spalt 7 kann beim Anschweissen des Endteils 11 so gewählt werden, dass seine Spaltbreite etwa der Spaltbreite des zwischen den einzelnen Windungen 3 eingeschlossenen Spaltes 7 entspricht. Dadurch erübrigt sich ein Abdichten der Spaltfilterkerze 1 im Endbereich. Der Spalt 7 zwischen dem Endteil 11 und dem Draht 2 wird ähnlich wie der zwischen den Windungen 3 eingeschlossene Spalt 7 zur Filtration verwendet. Die Spaltbreite liegt bei der Filtration von Bier typischerweise in einem Bereich von 40 - 110 µ.

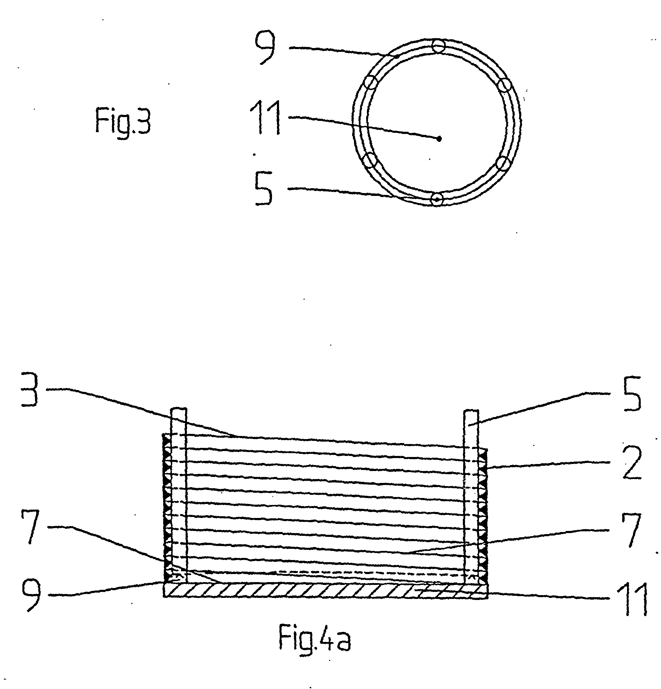

Figur 3 zeigt einen Querschnitt durch die Filterkerze von Figur 2 entlang der Linie A-A. Die Tragstäbe 5 sind am äusseren Rand des Endteils 11 aufgeschweisst. Zur klaren Definierung der Schweisspunkte ist das Endteil 11 in seinem äusseren Rand mit einem vorstehenden, im Querschnitt etwa dreieckförmigen Wulst 9 versehen.

Figur 4a zeigt einen Querschnitt durch den unteren Teil der Spaltfilterkerze von Figur 2. Der Draht 2 ist in Wicklungen 3 um die Tragstäbe 5 gewickelt, so dass zwischen den einzelnen Windungen 3 ein Spalt 7 verbleibt. Der Draht 2 weist ein im wesentlichen dreieckiges Profil auf.

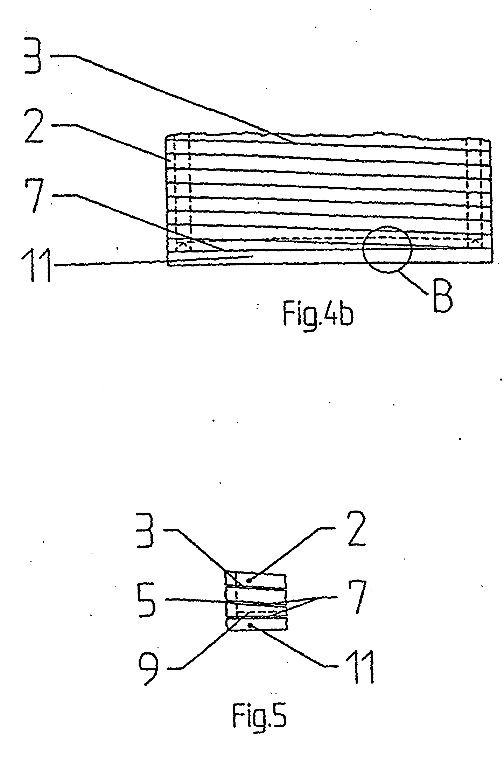

Figur 4b zeigt den Ausschnitt der Spaltfilterkerze aus Figur 4a in der Seitenansicht. In Figur 4b ist der zwischen der letzten der Windungen 3 des Drahtes 2 und dem Endteil 11 gebildete Spalt 7 klar sichtbar.

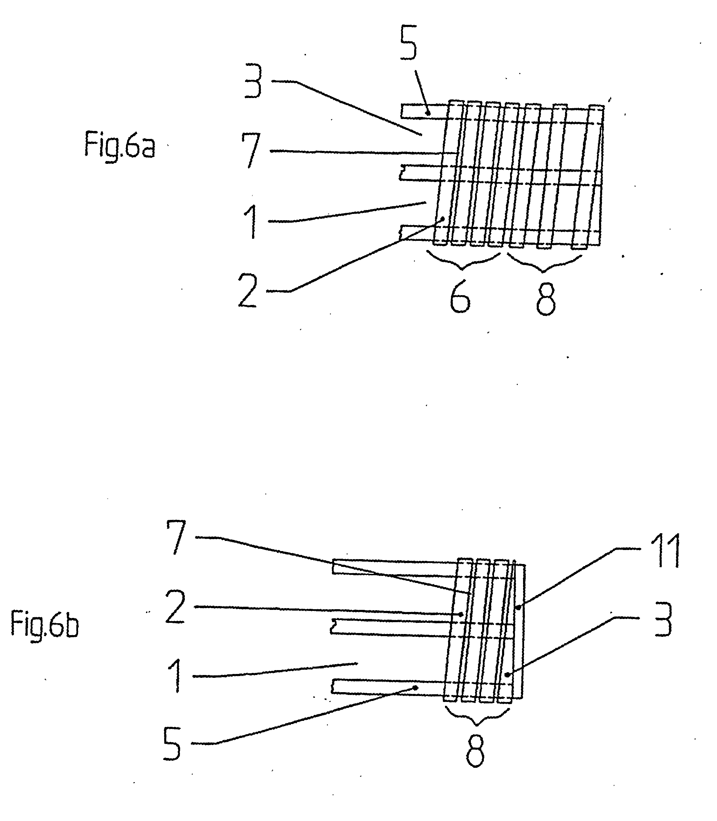

Figur 5 zeigt einen vergrösserten Ausschnitt B von Figur 4b. Die letzte Windung 3 des Drahts 2 ist auf ihrer dem Endteil 11 zugewandten Seite derart abgeschliffen, dass sie eine zur Oberfläche des Endteils 11 parallele Oberfläche aufweist. Zwischen den einzelnen Windungen 3 des Drahts 2 sowie zwischen der letzten Windung 3 des Drahts 2 und dem Endteil 11 werden Spälte 7 gebildet, die eine Spaltbreite von etwa 40 - 110 p aufweisen. Die Tragstäbe 5 sind im Randbereich auf das Endteil 11 geschweisst. Der umlaufende Wulst 9 dient zur präzisen Positionierung der Tragstäbe auf dem Endteil 11. Die Spaltbreite des Spaltes 7 zwischen den einzelnen Windungen 3 ist über die ganze Höhe der Filterkerze 1 im wesentlichen gleich. Um diese gleichmässige Spaltbreite zu erreichen, sind die Tragstäbe 5 in ihrem Randbereich 8, d.h. etwa im Bereich der drei bis fünf letzten Windungen 3 des Drahtes 2 gestaucht. Diese Stauchung im Randbereich 8 tritt beim Schweissvorgang aufgrund des zum Schweissen notwendigen Drucks und aufgrund der Erwärmung durch das Schweissen im Randbereich 8 auf.

Figur 6a zeigt schematisch einen ersten Verfahrensschritt zum Herstellen der erfindungsgemässen Filterkerze 1. Ein Draht 2 wird in Windungen 3 über ein Traggerüst aus Tragstäben 5 derart aufgewickelt, dass zwischen den einzelnen Windungen 3 in einem mittigen Bereich 6 der Tragstäbe ein Spalt 7 einer bestimmten Breite (etwa 70 µ plus/minus 40 µ) gebildet wird. Im Randbereich 8 der Tragstäbe 5 werden die Windungen 3 so ausgebildet, dass der Spalt 7 zwischen den einzelnen Windungen grösser ist (etwa 500 µ) als der Spalt 7 im mittigen Bereich 6 der Tragstäbe. Der Draht 2 wird durch Punktschweissen auf die Tragstäbe 5 aufgeschweisst.

Figur 6b zeigt die Spaltfilterkerze 1 aus Figur 6a, bei welcher die letzte der Windungen 3 derart plan abgeschliffen wurde, dass sie parallel zur Oberfläche eines angeschweissten Endteils 11 liegt. Durch den Schweissvorgang wurde ein Druck auf die Tragstäbe 5 ausgeübt. Ausserdem wurden die Tragstäbe in ihrem Randbereich 8 durch das Schweissen erwärmt. Durch die Kombination von Druck und Wärme wurden die Tragstäbe 5 im Randbereich 8 gestaucht. Dies bewirkt auch eine Reduktion der Spaltbreite des Spaltes 7 im Endbereich 8. Dadurch, dass beim Aufwickeln des Drahtes 2 auf die Tragstäbe 5 im Randbereich 8 eine grössere Spaltbreite gewählt wurde, weist der Spalt 7 nach dem Aufschweissen des Endteils 11 eine über die ganze Länge der Spaltfilterkerze 1 homogene Spaltbreite auf.

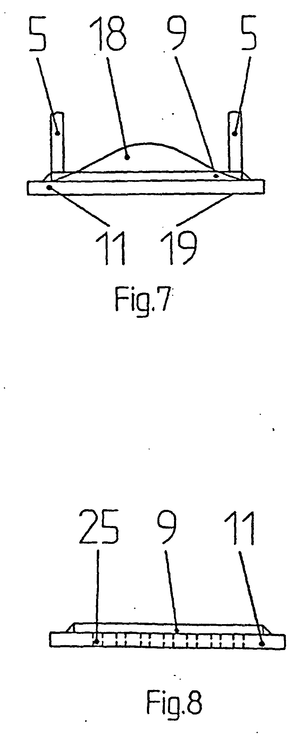

Figur 7 zeigt ein Endteil 11, welches einen mittigen Bereich 18 und einen Randbereich 19 aufweist. Die Oberfläche des mittigen Bereiches 18 ragt in das Innere der Spaltfilterkerze 1 hinein.

Durch diese Formgebung wird ein besseres Rückspülverhalten im Bereich des Endteils 11 der Spaltfilterkerze 1 erreicht. Im Randbereich 19 des Endteils 11 ist ausserdem ein umlaufender Wulst 9 vorgesehen, der zur genauen Positionierung der Tragstäbe 5 dient.

Figur 8 zeigt ein weiteres Ausführungsbeispiel eines Endteils 11. Das Endteil 11 ist mit Durchlässen 25 versehen, die ebenfalls das Rückspülverhalten verbessern. Die Durchlässe weisen einen Minimaldurchmesser auf, der etwa der Spaltbreite des Spalts 7 entspricht. Selbstverständlich können die in Figur 7 und 8 gezeigten Ausführungsbeispiele miteinander kombiniert werden, wodurch ein noch besseres Rückspülverhalten erzielt werden kann.

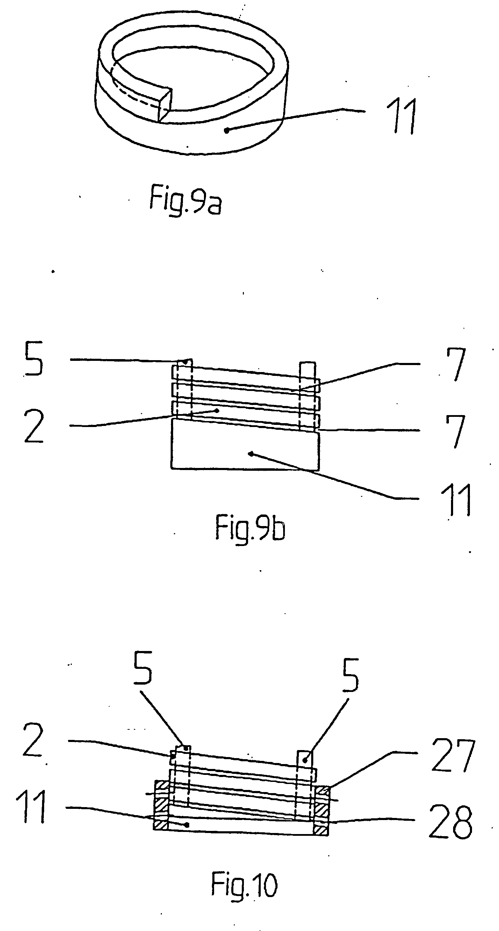

Figur 9a zeigt schematisch ein Endteil 11, welches in seinem Randbereich eine Formgebung aufweist, die der Form der letzten Windung des Drahts 2 entspricht. Auf diese Weise muss die letzte Windung 3 des Drahtes 2 nicht bearbeitet werden und es kann trotzdem ein genau definierter Spalt zwischen dem Endteil 1 und der letzten der Windungen 3 erreicht werden.

Figur 9b zeigt eine Spaltfilterkerze 1 mit einem Endteil 11 gemäss der Figur 9a. Die spezielle Formgebung des Endteils 11 kann aus einem umlaufenden Wulst (wie in Figur 9a) aber auch aus einer Materialabtragung im Randbereich des Endteils 11 bestehen.

Figur 10 zeigt ein weiteres Ausführungsbeispiel einer Spaltfilterkerze. Da der Spalt zwischen dem Draht 2 und dem Endteil 11 bei einer erfindungsgemässen Spaltfilterkerze 1 genau definiert ist, erübrigt sich das aus dem Stand der Technik bekannte Verwenden einer Schrumpfhülse im unteren Bereich der Spaltfilterkerze 1. Falls aus Stabilitätsgründen dennoch eine solche Schrumpfhülse 27 gewünscht ist, kann ein ähnlich gutes Rückspülverhalten wie bei hülsenlosen Spaltfilterkerzen 1 erreicht werden, wenn die Hülse 27 mit Bohrungen 28 versehen ist. Die Bohrungen 28 können einen Durchmesser aufweisen, der grösser als die Spaltbreite der Spälte 7 ist. Die Filtration wird durch den Draht 2 gewährleistet. Dank der Bohrungen 28 kann aber angesammelter Schmutz zwischen der Hülse 27 und dem Draht 2 problemlos rückgespült werden.

## Patentansprüche

1. Spaltfilterkerze (1) für die Anschwemmfiltration, mit einem Traggerüst (4) aus Tragstäben (5) und einem in Windungen (3) schraublinienförmig um das Traggerüst (4) gewickelten und damit verbundenen Draht (2), wobei zwischen den Windungen (3) ein Spalt (7) mit einer definierten Spaltbreite belassen wird und wobei das Traggerüst (4) auf wenigstens einer Seite mit einem Anschlussstück (10, 11) verschweisst ist, wobei die Tragstäbe (5) in einem benachbart zum Anschlussstück (10, 11) liegenden Randbereich (8) gestaucht sind, und wobei die Windungen (3) mit den Tragstäben (5) im Randbereich derart verbunden sind, dass sich durch die Stauchung ein Spalt (7) ergibt, der über die ganze Filterkerze (1) eine gleichbleibende Spaltbreite aufweist.

2. Spaltfilterkerze (1) für die Anschwemmfiltration nach Anspruch 1, mit einem Kopfteil (10) zur Befestigung der Spaltfilterkerze (1) an einer Lochplatte (16) einer Filteranordnung (12) und mit einem Endteil, welches an die Tragstäbe angeschweisst ist, wobei der Draht (2) an seinem dem Endteil (11) zugewandten Ende und/oder die dem Kopfteil (10) zugewandte Oberfläche des Endteils (11) derart bearbeitet ist, dass zwischen der letzten der Windungen (3) des Drahtes (2) und der Oberfläche des Endteils (10) ein Spalt (7) gebildet wird, der im wesentlichen dieselbe Spaltbreite aufweist wie der durch die Windungen (3) des Drahtes (2) definierte Spalt (7).

3. Spaltfilterkerze nach Anspruch 2, **dadurch gekennzeichnet, dass** der Draht (2) im Bereich der letzten seiner Windungen (3) plan geschliffen ist.

4. Spaltfilterkerze nach Anspruch 2, **dadurch gekennzeichnet, dass** das Endteil (11) einen gegen das Kopfteil (10) der Spaltfilterkerze (1) gerichteten unter einer Steigung verlaufenden, umlaufenden Rand aufweist, wobei die Steigung des Rands der Steigung des schraubenlinienförmig aufgebrachten Drahtes (2) der Spaltfilterkerze (1) entspricht.

5. Spaltfilterkerze nach einem der Ansprüche 2 bis 4, **dadurch gekennzeichnet, dass** das Endteil (11) einen mittigen Bereich (18) und einen Randbereich (19) aufweist, wobei der mittige Bereich (18) einen geringeren Abstand zum Kopfteil (10) der Spaltfilterkerze (1) aufweist als der Randbereich (19).

6. Spaltfilterkerze nach Anspruch 5, **dadurch gekennzeichnet, dass** das Endteil (11) einen umlaufenden Wulst (9) zur definierten Aufnahme der Tragstäbe (5) aufweist.

7. Spaltfilterkerze nach Anspruch 1 oder 2, **dadurch gekennzeichnet, dass** ein Endteil (11) montiert ist, welches mit Durchlässen (25) versehen ist, deren minimaler Durchmesser etwa der Spaltbreite eines Spaltes (7) zwischen den Windungen (3) eines Drahtes (2) einer Spaltfilterkerze entspricht, insbesondere einen Wert im Bereich von 40 - 110 µm aufweist.

8. Verfahren zur Herstellung einer Spaltfilterkerze (1) für die Anschwemmfiltration, **gekennzeichnet durch** folgende Schritte:
1. Aufbringen auf und Verbinden eines Drahtes (2) in schraubenlinienförmigen Windungen (3) mit einem Traggerüst (4) aus etwa zylindrisch angeordneten Tragstäben (5), wobei zwischen den Windungen (3) in einem mittigen Bereich (6) des Traggerüstes (4) ein Spalt (7) mit einer definierten Spaltbreite belassen wird, und wobei bei wenigstens je drei im Randbereich (8) des Traggerüstes (4) angeordneten Windungen (3) ein Spalt belassen wird, der eine grössere Spaltbreite als der Spalt (7) im mittigen Bereich des Traggerüstes (4) aufweist
2. Befestigen eines Kopf- und/oder eines Endteils (10, 11) an den Randbereichen (8) des Traggerüstes (4) **durch** Elektroschweissen, wobei die Tragstäbe (5) im Randbereich (8) **durch** Kraft- und Wärmeeinwirkung derart gestaucht werden, dass der Spalt (7) zwischen den Windungen (3) des Drahtes in dem Randbereich (8) des Traggerüstes (4) auf etwa gleiche definierte Spaltbreite reduziert wird, wie der Spalt (7) im mittigen Bereich (6) des Traggerüstes (4).

9. Verfahren nach Anspruch 8, **dadurch gekennzeichnet, dass** vor dem Befestigen eines Kopf- und/oder eines Endteils (10, 11) die letzte Windung (3) des Drahts (2) plan abgeschliffen wird.

## Claims

1. An edge filter candle (1) for precoat filtration, having a supporting framework (4) comprising supporting rods (5) and a wire (2) wound helically in turns (3) around the supporting framework (4) and connected to the latter, a gap (7) with a defined width being left between the turns (3) and the supporting framework (4) being welded, on at least one side, to a connecting piece (10, 11), the supporting rods (5) being upset in an edge region (8) adjacent to the connecting piece (10, 11), and the turns (3) being connected to the supporting rods (5) in the end region in such a way that a gap (7) which has a constant gap width over the entire filter candle (1) results from the upsetting.

2. An edge filter candle (1) for precoat filtration according to Claim 1, having a top part (10) to fix the An edge filter candle (1) to a perforated plate (16) of a filter arrangement (12), and having an end part which is welded onto the supporting rods, the wire (2), at its end facing the end part (11) and/or the surface of the end part (11) that faces the top part (10), being machined in such a way that, between the last of the turns (3) of the wire (2) and the surface of the end part (10), there is formed a gap (7) which has substantially the same gap width as the gap (7) defined by the turns (3) of the wire (2).

3. An edge filter candle according to Claim 2, **characterized in that**, in the region of the last of its turns (3), the wire (2) is ground flat.

4. An edge filter candle according to Claim 2, **characterized in that** the end part (11) has a circumferential rim which is oriented towards the top part (10) of the An edge filter candle (1) and runs with a slope, the slope of the edge corresponding to the slope of the helically applied wire (2) of the An edge filter candle (1).

5. An edge filter candle according to one of Claims 2 to 4, **characterized in that** the end part (11) has a central region (18) and an edge region (19), the central region (18) having a smaller spacing from the top part (10) of the An edge filter candle (1) than the edge region (19).

6. An edge filter candle according to Claim 5, **characterized in that** the end part (11) has a circumferential bead (9) to hold the supporting rods (5) in a defined manner.

7. An edge filter candle according to Claim 1 or 2, **characterized in that** an end part (11) is mounted which is provided with passages (25) whose minimum diameter corresponds approximately to the gap width of a gap (7) between the turns (3) of a wire (2) of a An edge filter candle, in particular a value in the range from 40 - 110 µm.

8. Method of producing an edge filter candle (1) for precoat filtration, **characterized by** the following steps:
1. application of and connection of a wire (2) in helical turns (3) to a supporting framework (4) comprising approximately cylindrically arranged supporting rods (5), a gap (7) with a defined gap width being left between the turns (3) in a central region (6) of the supporting framework (4), and, in the case of at least three turns (3) in each case arranged in the edge region (8) of the supporting framework (4), a gap being left which has a greater width than the gap (7) in the central region of the supporting framework (4)
2. fixing a top and/or an end part (10, 11) to the edge regions (8) of the supporting framework (4) by means of electric welding, the supporting rods (5) in the edge regions (8) being upset by the action of force and heat in such a way than the gap (7) between the turns (3) of the wire in the edge regions (8) of the supporting framework (4) is reduced to approximately the same defined gap width as the gap (7) in the central region (6) of the supporting framework (4).

9. Method according to Claim 8, **characterized in that**, before the fixing of a top and/or an end part (10, 11), the last turn (3) of the wire (2) is ground flat.

## Revendications

1. Bougie filtrante à fentes (1) pour la filtration à couches, comportant une ossature de support (4) formée de barres de support (5), et un fil (2) enroulé en spires (3) suivant une forme hélicoïdale autour de l'ossature (4) et relié à celle-ci, en laissant une fente (7) d'une largeur définie entre les spires (3), étant précisé que l'ossature de support (4) est soudée sur au moins un côté à une pièce de raccordement (10, 11), que les barres de support (5) sont refoulées dans une zone de bordure (8) voisine de la pièce de raccordement (10, 11), et que les spires (3) sont reliées aux barres de support (5) dans cette zone de bordure de telle sorte qu'on obtienne grâce au refoulement une fente (7) qui présente une largeur constante sur toute la bougie filtrante (1).

2. Bougie filtrante à fentes (2) pour la filtration à couches selon la revendication 1, comportant une partie supérieure (10) pour la fixation de ladite bougie filtrante à fentes (1) à une plaque perforée (16) d'un dispositif filtrant (12), et une partie d'extrémité qui est soudée aux barres de support, étant précisé que le fil (2), à son extrémité tournée vers la partie d'extrémité (11), et/ou la surface de cette dernière qui est tournée vers la partie supérieure (10) sont usinés de telle sorte qu'il se forme entre la dernière des spires (3) du fil (2) et la surface de la partie d'extrémité (10) une fente (7) qui présente sensiblement la même largeur que la fente (7) définie par les spires (3) du fil (2).

3. Bougie filtrante à fentes selon la revendication 2, **caractérisée en ce que** le fil (2) est soumis à une rectification plane dans la zone de sa dernière spire (3).

4. Bougie filtrante à fentes selon la revendication 2, **caractérisée en ce que** la partie d'extrémité (11) présente un bord circulaire qui est dirigé vers la partie supérieure (10) de ladite bougie filtrante à fentes (1) et qui présente une inclinaison, cette inclinaison correspondant à celle du fil (2) de la bougie filtrante (1) qui est monté en hélice.

5. Bougie filtrante à fentes selon l'une des revendications 2 à 4, **caractérisée en ce que** la partie d'extrémité (11) comprend une zone centrale (18) et une zone de bordure (19), la zone centrale (18) présentant par rapport à la partie supérieure (10) de ladite bougie filtrante à fentes (1) un écartement plus faible que la zone de bordure (19).

6. Bougie filtrante à fentes selon la revendication 5, **caractérisée en ce que** la partie d'extrémité (11) présente un renflement circulaire (9) pour la réception définie des barres de support (5).

7. Bougie filtrante à fentes selon la revendication 1 ou 2, **caractérisée en ce qu'**il est prévu une partie d'extrémité (11) qui est pourvue de passages (25) dont le diamètre minimal correspond à peu près à la largeur d'une fente (7) entre les spires (3) d'un fil (2) d'une bougie filtrante à fentes, et présente notamment une valeur située dans la plage de 40 à 110 *µ*m.

8. Procédé pour fabriquer une bougie filtrante à fentes (1) pour la filtration à couches, **caractérisé par** les étapes suivantes qui consistent :
1. à monter un fil (2) en spires hélicoïdales (3) et à le relier à une ossature de support (4) composée de barres de support (5) disposées à peu près suivant une forme cylindrique, en laissant entre les spires (3), dans une zone centrale (6) de l'ossature de support (4), une fente (7) d'une largeur définie, et en laissant pour au moins trois spires (3) disposées dans la zone de bordure (8) de l'ossature de support (4) une fente présentant une plus grande largeur que la fente (7) de la zone centrale de ladite ossature (4) ;
2. et à fixer une partie supérieure et/ou une partie d'extrémité (10, 11) aux zones de bordure (8) de l'ossature de support (4) par soudage électrique, les barres de support (5) étant refoulées dans la zone de bordure (8) grâce à l'action d'une force et de la chaleur, de telle sorte que la fente (7) entre les spires (3) du fil dans la zone de bordure (8) de l'ossature (4) soit réduit à peu près à la même largeur définie que la fente (7) prévu dans la zone centrale (6) de ladite ossature (4).

9. Procédé selon la revendication 8, **caractérisé en ce qu'**avant de fixer une partie supérieure et/ou une partie d'extrémité (10, 11), on soumet la dernière spire (3) du fil (2) à une rectification plane.
